# EUROPEAN PATENT SPECIFICATION

(11) **EP 1 775 513 B1**
(45) Date of publication and mention of the grant of the patent: **02.09.2009**
(21) Application number: 05022216.5
(22) Date of filing: 12.10.2005
(51) Int. Cl.: F21V 8/00, G02B 6/42

(54) **Monolithic arrayed light guide**
Monolithisch geformter Lichtleiter in linearer Anordnung
Guide de lumière monolithique en réseau

(43) Date of publication of application: 18.04.2007
(73) Proprietor: Omron Europe B.V., 5234 GM 's-Hertogenbosch (NL)
(72) Inventor: Foreman, Tim, 5627 VV Eindhoven (NL); Risseeuw, Dimitri, 2960 Brecht (BE); Van de Ven, Clement Jeroen Maarten Maria, 5421 ZW Gemert (NL); Flettner, Axel, 71126 Gäufelden-Nebringen (DE)
(74) Representative: Hess, Peter K. G.

(56) References cited:
- WO-A-01/33274
- DE-A1- 3 703 423
- GB-A- 2 346 979
- US-A1- 2004 262 053

## Description

### 1. Field of the invention

The present invention relates to a light guide for guiding light from at least two separate light sources to at least two separate light outlets. Such light guides are used in electronics or consumer goods to display light signals.

### 2. Prior art

Light guides are passive components to guide light from a light source to a distant light outlet. The guiding of the light is based on the total reflection of the light on the outer surface of light guiding portions of the light guide, i.e. the transition between the light guide material and the ambient air.

In various electronic or consumer goods the status of the product or the good is displayed by means of light sources, for example LEDs. However, it is not always possible to arrange the LEDs directly at a front panel of the product due to space constrains. On the other hand, it is undesired to connect LEDs at front panels with the control electronics by means of cables. In such space constrained situations light guides are used, which guide the light for example of an LED arranged on a printed circuit board to the desired location, for example a light outlet of a front panel.

In applications, where the light signals of two or more light sources should be displayed light guides of a transparent plastic material are used, having different light input faces and different light emitting faces, which form an array. For ease of manufacturing and assembly such light guides are made as an integral part which is injection molded of one basic material, for example polycarbonate. The light guide usually comprises several light guiding portions, which are each associated to one corresponding light source, and which are connected to each other by means of a connecting portion.

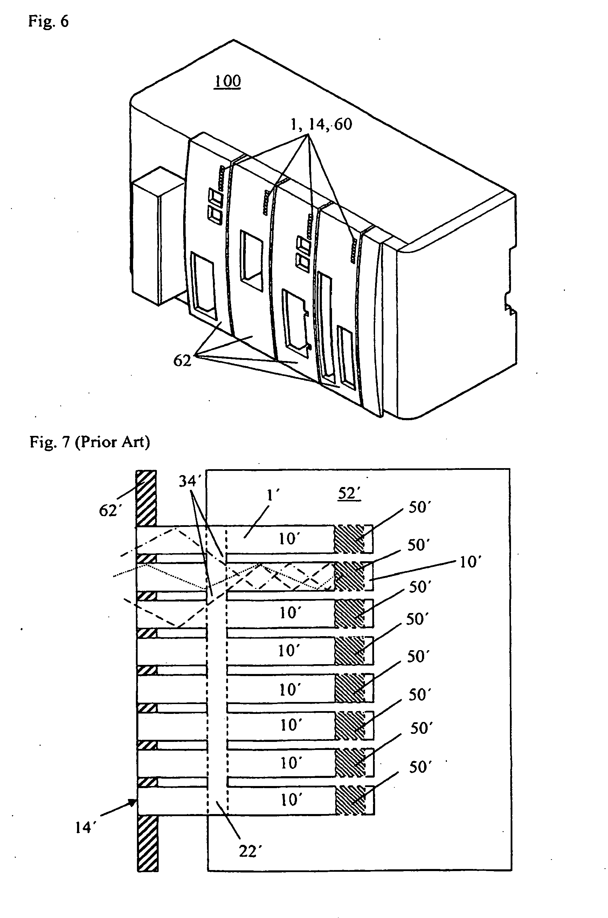

Figure 7 shows an example for a light guide 1' according to the prior art. In this embodiment eight light sources 50', for example LEDs, are arranged on a printed circuit board (PCB) 52', to generate light activated. The generated light is introduced into eight corresponding light guiding portions 10', which guide the light to eight corresponding light emitting faces 14'. The light guiding portions 10' are connected to each other by means of a connecting portion 22' such that the light guide 1' forms an integral part.

As it can be seen in Fig. 7 the light guiding portions 10' usually have the same length on the LED side, such that the LEDs 50' are arranged in one line to introduce their light into the light guiding portions 10'.

In such an embodiment, however, the light of one LED is not only introduced into the corresponding light guiding portion 10' but parts of the light are also introduced into adjacent light guiding portions 10' (cross talking). Possible shielding between the LEDs is avoided due to cost reasons.

Therefore, the light of one LED will also be visible to some extend on adjacent light emitting faces 14', such that the user in some cases cannot properly determine which LED is actually activated.

Additionally, in the prior art the light guiding portions 10'are connected to each other by means of a connecting portion 20' which allows the transition of light from one light guiding portion 10' to adjacent ones. This situation is shown in Figure 7. If the second LED 50' (in Figure 7 counted from the top) is activated its light is guided through the light guiding portion 10' to the corresponding light emitting face 14' as indicated by the dotted line.

However, as it can be seen in Figure 7 the light of the second LED 50' is also guided through material 34' of the connecting portion 20' into adjacent light guiding portions 10' (first and third light guiding portions 10'). This is indicated in Figure 7 by the dashed and the chain dotted line. Therefore, the light of the second LED 50' is also, at least partially visible on the first and the third light emitting faces 14'.

As mentioned above, this is undesired, since the user under some circumstances cannot exactly determine which LED 50' is activated.

The document DE 37 03 423 A1 shows a plurality of separate L-shaped light guides within an electrical connector which are connected with each other by a cross bar.

The document GB 2 346 979 A shows an integral light guide wherein light beams of a plurality of LEDs are introduced into a common block. The block comprises features that reduce crosstalk if as far as possible parallel light is used.

In view of the above it is the problem of the present invention to provide a light guide, which has improved light guiding properties and cross-talking, such that the light information to be displayed is unambiguous.

### 3. Summary of the invention

The above mentioned problem is solved by a light guide according to independent claim 1.

Particularly this problem is solved by a light guide for guiding light from at least two separate light sources to at least two separate light outlets; comprising at least two light guiding portions, each associated to one corresponding light source, respectively, wherein the light guiding portions guide the light of the corresponding light source to the corresponding light outlet; and at least one connecting portion, which connects the light guiding portions with each other, such that the light guide forms an integral part made of one basic material; wherein the connecting portion connects each light guiding portion only at a defined contact area, which is not arranged in between two adjacent light guiding portions.

Each light guiding portion is rod shaped as an elongated, parallel prism. An elongated, parallel prism is a very good optical wave guide, having total reflection properties at the surface. Preferably, the prism has a square, round or rectangular section.

Material in between two light guiding portions is omitted, such that there is no direct connection between two adjacent light guiding portions.

Having such an arrangement the light introduced into one light guiding portion does not cross over to adjacent light guiding portions and therefore it is not visible at adjacent light outlets. The omitting of material between two light guiding portions provides a light barrier, where the guided light reflects totally. This leads to an non-interrupted light guiding portion.

In a first preferred embodiment the contact area is essentially rectangular. Rectangular contact areas result if the light guiding portions intersect with perpendicularly arranged connecting portions.

In a further preferred embodiment the adjacent light guiding portions additionally have a different length at their light source side. Therefore the introduction of light into the light guiding portions is optimized.

Preferably, adjacent light guiding portions have a different length at the light source side.

With such an arrangement the light sources can be arranged on the PCB more distant from each other, such that the light emitted of the light source is only introduced into the intended light guiding portion and not into adjacent light guiding portions. Therefore, the light guide displays unambiguous light signals at the light outlets.

In a further preferred embodiment the light guide comprises two sets of light guiding portions, wherein the light guiding portions of each set have a common length at their light source side and wherein the light guiding portions of one set and the other set are alternately arranged at the light guide. In this embodiment long and short light guiding portions are alternately provided at the light guide. Therefore, the corresponding light sources can be arranged accordingly. This maximizes the distance of the light sources with respect to each other in a given space on a PCB.

In a further preferred embodiment each of the light guiding portions comprise a slanted end, which forms a light reflection face. Due the light reflection face the light sources can be arranged essentially perpendicular to the light guiding portions.

According to the invention, the connecting portion is essentially perpendicularly arranged to the longitudinal axis of the light guiding portions. In such an arrangement only a small fraction of the light is introduced into the connecting portion.

According to the invention, the light guide comprises two oppositely arranged connecting portions. Two connecting potions on opposite sides of the light guide increase the mechanical stability of the light guide.

In a further preferred embodiment the light guiding portions comprise light emitting faces which form an array. The light emitting faces can be arranged in an ordered fashion, for example in line and with the same distance from each other.

Further preferred embodiments result from the sub-claims.

### 4. Short description of the drawings

In the following preferred embodiments of the invention are described with reference to the drawings. Therein it shows:
Fig. 1 a three-dimensional view of a preferred light guide according to the invention;
Fig. 2 a three-dimensional view of a further preferred embodiment of the light guide according to the invention;
Fig. 3 an elongated frontal view of the light guide according to Fig. 1;
Fig. 4 a sectional side view of an electronic device comprising a light guide according to the invention, taken along line A-A of Fig. 5;
Fig. 5 a sectional top view from the device according to Fig. 4, taken along the line B-B of Fig. 4;
Fig. 6 an electronic device using four light guides; and
Fig. 7 an electronic device comprising a light guide according to the prior art.

### 5. Description of the preferred embodiments

In the following preferred embodiments of the invention are described in detail with reference to the drawings.

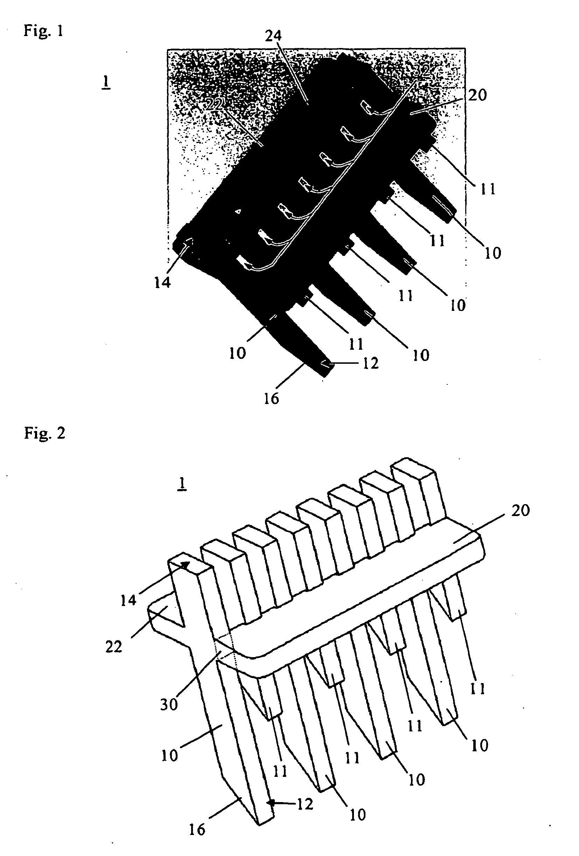

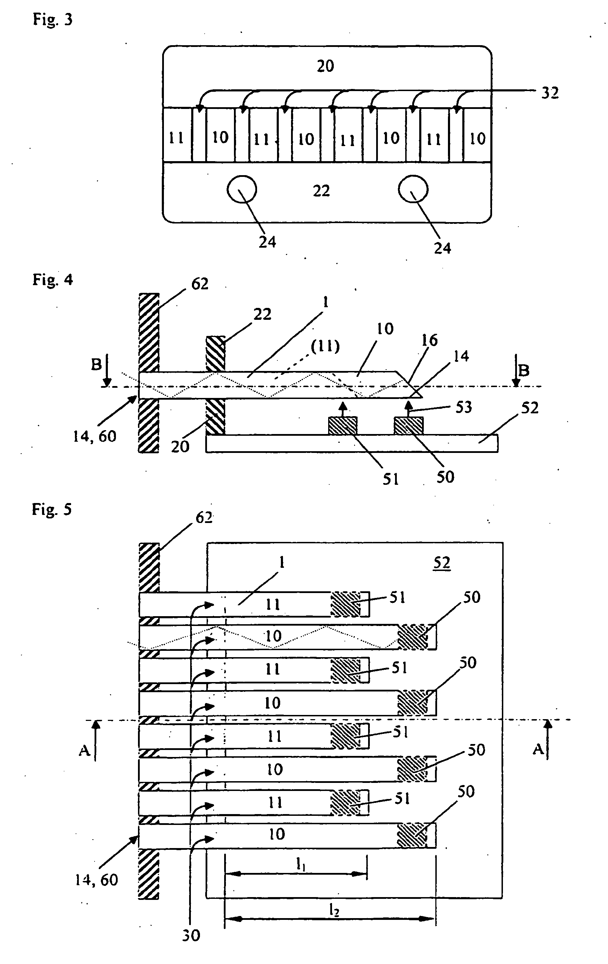

Figure 1 shows a light guide according to a first embodiment of the invention. The light guide comprises eight light guiding portions 10, 11, which are each associated to one corresponding light source 50, 51, respectively, to guide the light of the corresponding light source 50, 51 to corresponding light outlets 60 (confer also Fig. 4 and Fig. 5).

The light guiding portions 10, 11 are preferably elongated prisms having a rectangular section. It should be noted, that prisms having other sections, like round, triangular, square, etc. can also be used as light guiding portions 10, 11. It is only important, that the prisms comprise smooth surfaces, which act as total mirrors for the guided light. Each light guiding portion 10, 11 comprise a light input face 12, which receives the light emitted from a light source 50, 51. The received light is reflected by light reflection faces 16 to the longitudinal direction of the light guiding portions 10, 11. Each light guiding portion 10, 11 further comprise a light emitting face 14, which emits the light, that should be displayed to the user.

In the shown embodiment of Fig. 2 and Fig. 4 the light reflection face is slanted by about 45° with respect to the longitudinal direction of the light guiding portions 10, 11. This provides a reflection of light emitted perpendicularly to the longitudinal direction of the light guiding portions 10, 11 by the light sources 50, 51, as shown by arrow 53 in Fig. 4.

The light emitting faces 14 are preferably perpendicularly arranged to the longitudinal direction of the light guiding portions 10, 11. However, of course other orientations and shapes of the light emitting faces 14 are possible, depending on the desired design of the product. Further, it is possible to vary the length of the light guiding portions 10, 12 at the emitting side, such that the light guide can be adapted to arbitrarily shaped front panels.

The light guide 1 further comprises two connecting portions 20, 22 which connect the light guiding portions 10, 11 with each other, such that the light guide 1 forms an integral part. Therefore, the light guiding portions 10, 11 are connected to each other and do not have to be mounted separately at the final product. The light emitting faces 14 preferably form a linear array, as shown in Fig. 1.

Further, the light guide 1 is made of one basic material, preferably a transparent polycarbonate which has good light guiding properties for the light emitted from the light sources 50, 51. The light sources 50, 51 are preferably LEDs that may emit light of various colors (different wavelengths), including IR-light.

In contrary to the prior art shown in Fig. 7 the light guide 1 according to the invention comprises a defined area 30, shown in Fig. 2 and Fig. 5, where the connecting portion 20, 22 contacts each light guiding portion 10, 11, only. It should be noted that in Fig. 2 only one defined area 30 of the first light guiding portion 10, 11 was highlighted as an example for the other areas 30 of the other light guiding portions 10, 11.

It is important that the defined areas 30 are not arranged in between two adjacent light guiding portions 10, 11. This leads to areas 32, which do not contain material, as it can be seen in Fig. 1 and Fig. 3. Therefore, there is no light transition from one light guiding portion 10, 11 to adjacent light guiding portions 10, 11 via the connecting portions 20, 22.

As it is shown by the dotted line in Fig. 5 the light of the corresponding light source 50, 51 is only guided through the corresponding light guiding portion 10, 11 to the light emitting face 14, respectively the corresponding light outlet 60 in the front panel 62. There is no direct connection between two adjacent light guiding portions 10, 11, since material in the areas 32 is omitted. Light which passes through the defined contact area 30 is essentially not guided to an adjacent light guiding portion 10, 11 via the connecting portions 20, 22 due to the perpendicular arrangement of the connecting portion 20, 22 with respect to the light guiding portions 10, 11.

Therefore, light introduced into the light input face 12 of a particular light guiding portion 10, 11 will be guided to the corresponding light emitting face 14 nearly to its full extent. Particularly, the light is not guided to adjacent light guiding portions 10, 11 and it is not visible at adjacent light emitting faces 14. Therefore, the light signal shown at the corresponding light outlet 60 can be clearly distinguished by the user of the product.

Preferably the light emitted from one light source 50, 51 is only radiated into the corresponding light input face 12 of the corresponding light guiding portion 10, 11. A light input into adjacent light input faces 12 of adjacent light guiding portions 10, 11 should be avoided. However, due to design reasons in some cases the distance between the light guiding portions 10, 12 and/or the light emitting faces 14 has to be comparably small, such that usually also the light sources 50, 51 were arranged very close to each other, like in the prior art embodiment of Fig. 7.

Light guiding portions 10, 11 are provided which have a different length l₁, l₂ of adjacent light guiding portions 10, 11 at the light sources side, such that the light sources 50, 51 can be arranged further away from each other on the PCB 52. As it can be seen in Figs. 4 and 5 the light guiding portions 10 are longer (length l₂) on the light sources side than the light guiding portions 11 (length l₂). Therefore, the light sources 50 are arranged on a line which is distant from the line of the light sources 51. With such an alternating or staggered arrangement of light sources 50 and light sources 51, it is secured, that the light sources 50, 51 (for example LEDs) do only radiate light into the light input face 12 of the corresponding light guiding portion 10, 11 and not into adjacent light input faces 12.

Therefore, only the light of one light source 50, 51 is visible for the user at the light emitting face 14 of the corresponding light guiding portion 10, 11.

To facilitate the assembly of the light guide to the front panel 62 or to the PCB 52 the connecting portion 20, 22 can be provided with mounting elements, like the mounting holes 24 provided at connecting portion 22.

The light guide 1 can be comparably small. In a preferred embodiment the light guiding portions 10, 11 have a rectangular section having 0.8mm x 2mm in size. Correspondingly, the light emitting faces 14 are 0.8mm x 2mm in size and spaced from each other by 0.8mm. Therefore, the shown light guide 1 having eight light guiding portions 10, 11 is 12mm wide. The light guide 1 is adapted to a slanted front panel 62. Therefore, the small light guiding portions 51 are from 7mm to 8mm long and the long light guiding portions 50 from 11mm to 12mm. One connecting portion 20, 22 has 12mm in width, 3mm in height and is 1mm thick. Therefore, a defined contact area 30 of 0.8mm x 1mm results.

Figure 6 shows an exemplary embodiment of an electronic device having one or a plurality of front panels 62 with separate light outlets 60. Light guides 1 are arranged beneath the front panels 62 and the light emitting faces 14 of each light guide 1 extend through the separate light outlets 60 in order to display separate light signals to the user.

It should be noted, that the features of one embodiment can be combined with features of another embodiment. For example the light guiding portions 10, 11 with a different length can be combined with a connecting portion 20, 22 which contacts each light guiding portion 10, 11 at a defined contact area 30, which is not arranged in between two adjacent light guiding portions 10, 11.

### List of reference signs

- 1: light guide
- 10: long light guiding portions
- 11: short light guiding portions
- 12: light input faces
- 14: light emitting faces
- 16: light reflection faces
- 20, 22: connecting portion
- 24: mounting holes
- 30: defined contact area
- 32: omitted material portions
- 50, 51: light sources
- 52: printed circuit board PCB
- 53: emitted light
- 60: light outlets
- 62: front panel
- 100: electronic device

## Claims

1. Light guide (1) for guiding light from at least two separate light sources (50, 51) to at least two separate light outlets (60); comprising
a) at least two light guiding portions (10, 11), each associated to one corresponding light source (50, 51), respectively, wherein the light guiding portions (10, 11) guide the light of the corresponding light source (50, 51) to the corresponding light outlet (60); and
b) a connecting portion (20, 22) that connects the light guiding portions (10, 11) with each other; whereby
c) the connecting portion (20, 22) connects each light guiding portion (10, 11) only at a defined boundary area (30), which is not arranged in between two adjacent light guiding portions (10, 11); whereby
d) each light guiding portion (10, 11) comprises an elongated prism; and whereby
e) there is no direct connection between two adjacent light guiding portions (10, 11).
**characterized in that**
f) said connecting portion comprises two oppositely arranged connecting portions (20, 22), which are essentially perpendicularly arranged to the longitudinal axis of the light guiding portions (10, 11);
g) each light guiding portion (10, 11) is formed as an elongated prism;
h) said two connecting portions (20, 22) connect the light guiding portions (10, 11) such that the light guide (1) forms an integral part made of one basic material; wherein
i) material in between two light guiding portions is omitted to avoid said direct connection between two adjacent light guiding portions (10, 11).

2. Light guide according claim 1, wherein the contact area (30) is essentially rectangular.

3. Light guide according one of the claims 1 or 2, wherein adjacent light guiding portions (10, 11) have a different length (l₁, l₂) at their light source side.

4. Light guide according claim 3, comprising two sets of light guiding portions (10, 11), wherein the light guiding portions (10, 11) of each set have a common length (1₁, 1₂) at their light source side which is different from the common length (1₁, 1₂) of the other set and wherein the light guiding portions of one set and the other set are alternately arranged at the light guide.

5. Light guide according claim 1, wherein the prism has a square or rectangular section.

6. Light guide according one of the claims 1 - 5, wherein each of the light guiding portions (10, 11) comprise a slanted end, which forms a light reflection face (16).

7. Light guide according one of the claims 1 - 6, wherein the light guiding portions (10, 11) comprise light emitting faces (14) which form an array.

## Patentansprüche

1. Lichtwellenleiter (1) zum Leiten von Licht von wenigstens zwei separaten Lichtquellen (50, 51) zu wenigstens zwei separaten Lichtauslässen (60); umfassend
a) wenigstens zwei lichtleitende Abschnitte (10, 11), von denen jeder einer jeweils zugehörigen Lichtquelle (50, 51) zugeordnet ist, wobei die lichtleitenden Abschnitte (10, 11) das Licht der zugehörigen Lichtquelle (50, 51) zu dem zugehörigen Lichtauslass (60) leiten; und
b) einen Verbindungsabschnitt (20, 22), der die lichtleitenden Abschnitte (10, 11) mit einander verbindet; wobei
c) der Verbindungsabschnitt (20, 22) jeden der lichtleitenden Abschnitte (10, 11) nur an einem definierten Randbereich (30) verbindet der nicht zwischen zwei benachbarten lichtleitenden Abschnitten (10, 11) angeordnet ist; wobei
d) jeder lichtleitende Abschnitt (10, 11) ein längliches Prisma umfasst; und wobei
e) keine direkte Verbindung zwischen zwei benachbarten lichtleitenden Abschnitten (10, 11) besteht.
**dadurch gekennzeichnet, dass**
f) der Verbindungsabschnitt zwei gegenüberliegend angeordnete Verbindungsabschnitte (20, 22) umfasst, die im wesentlichen senkrecht zur Längsachse der lichtleitenden Abschnitte (10, 11) angeordnet sind;
g) jeder lichtleitende Abschnitt (10, 11) als längliches Prisma geformt ist;
h) die zwei Verbindungsabschnitte (20, 22) die lichtleitenden Abschnitte (10, 11) so verbinden, dass der Lichtwellenleiter (1) ein einstückiges, aus einem Basismaterial hergestelltes Teil bildet; wobei
i) Material zwischen zwei lichtleitenden Abschnitten ausgespart wird, um eine direkte Verbindung zwischen zwei benachbarten lichtleitenden Abschnitten (10, 11) zu vermeiden.

2. Lichtwellenleiter nach Anspruch 1, wobei der Kontaktbereich (30) im wesentlichen rechteckig ist.

3. Lichtwellenleiter nach einem der Ansprüche 1 oder 2, wobei benachbarte lichtleitende Abschnitte (10, 11) auf ihrer Lichtquellenseite verschiedene Längen (l₁, l₂) aufweisen.

4. Lichtwellenleiter nach Anspruch 3, umfassend zwei Gruppen von lichtleitenden Abschnitten (10, 11), wobei die lichtleitenden Abschnitte (10, 11) jeder Gruppe eine gemeinsame Länge (1₁, 1₂) auf ihrer Lichtquellenseite aufweisen, die verschieden von der gemeinsamen Länge (1₁, 1₂) der anderen Gruppe ist, und wobei die lichtleitenden Abschnitte der einen Gruppe und der anderen Gruppe alternierend im Lichtwellenleiter angeordnet sind.

5. Lichtwellenleiter nach Anspruch 1, wobei das Prisma ein quadratisches oder rechteckiges Profil aufweist.

6. Lichtwellenleiter nach einem der Ansprüche 1 - 5, wobei jeder der lichtleitenden Abschnitte (10, 11) ein abgeschrägtes Ende aufweist, welches eine Lichtreflexionsfläche (16) bildet.

7. Lichtwellenleiter nach einem der Ansprüche 1 - 6, wobei die lichtleitenden Abschnitte (10, 11) lichtemittierende Flächen (14) umfassen, welche ein Array bilden.

## Revendications

1. Guide de lumière (1) pour guider de la lumière depuis au moins deux sources lumineuses distinctes (50, 51) vers au moins deux sorties lumineuses distinctes (60), comprenant :
a) au moins deux parties de guidage de lumière (10, 11) chacune associée à une source lumineuse correspondante (50, 51), respectivement, où les parties de guidage de lumière (10, 11) guident la lumière de la source lumineuse correspondante (50, 51) vers la sortie lumineuse correspondante (60) ; et
b) une partie de liaison (20, 22) qui relie les parties de guidage de lumière (10, 11) l'une avec l'autre ; de sorte que
c) la partie de liaison (20, 22) relie chaque partie de guidage de lumière (10, 11) seulement à l'endroit d'une zone frontière définie (30), qui n'est pas configurée dans l'intervalle compris entre deux parties de guidage de lumière adjacentes (10, 11) ; de sorte que
d) chaque parties de guidage de lumière (10, 11) comprend un prisme allongé ; et de sorte que
e) il n'y a pas de liaison directe entre deux parties de guidage de lumière adjacentes (10, 11),
**caractérisé en ce que**
f) ladite partie de liaison comprend deux parties de liaison configurées en vis-à-vis (20, 22), qui sont configurées essentiellement perpendiculairement à l'axe longitudinal des parties de guidage de lumière (10, 11) ;
g) chaque partie de guidage de lumière (10, 11) est formée en un prisme allongé ;
h) lesdites deux parties de liaison (20, 22) relient les parties de guidage de lumière (10, 11) de manière que le guide de lumière (1) forme une pièce monobloc réalisée en un matériau de base ; dans lequel
i) le matériau compris dans l'intervalle entre deux parties de guidage de lumière est omis afin d'éviter ladite liaison directe entre deux parties de guidage de lumière adjacentes (10, 11).

2. Guide de lumière selon la revendication 1, dans lequel la zone de contact (30) est essentiellement rectangulaire.

3. Guide de lumière selon l'une des revendications 1 ou 2, dans lequel les parties de guidage de lumière adjacentes (10, 11) ont des longueurs différentes (11, 12) de leur côté de la source lumineuse.

4. Guide de lumière selon la revendication 3, comprenant deux ensembles de parties de guidage de lumière (10, 11), dans lequel les parties de guidage de lumière (10, 11) de chaque ensemble ont de leur côté source lumineuse une longueur commune (11, 12) qui est différente de la longueur commune (11, 12) de l'autre ensemble, et dans lequel les parties de guidage de lumière de l'un des ensembles et de l'autre ensemble sont disposées en alternance à l'endroit du guide de lumière.

5. Guide de lumière selon la revendication 1, dans lequel le prisme possède une section carrée ou rectangulaire.

6. Guide de lumière selon l'une des revendications 1 à 5, dans lequel chacune des parties de guidage de lumière (10, 11) comprend une extrémité inclinée, qui forme une face de réflexion de lumière (16).

7. Guide de lumière selon l'une des revendications 1 à 6, dans lequel les parties de guidage de lumière (10, 11) comprennent des faces d'émission de lumière (14) qui forment un réseau.
